# EUROPÄISCHE PATENTSCHRIFT

(11) **EP 3 386 034 B1**
(45) Veröffentlichungstag und Bekanntmachung des Hinweises auf die Patenterteilung: **03.04.2019**
(21) Anmeldenummer: 17305415.6
(22) Anmeldetag: 07.04.2017
(51) Int. Cl.: H01R 4/68, H01R 13/52

(54) **ENDVERSCHLUSS FÜR EIN SUPRALEITENDES KABEL UND VERFAHREN ZUM AUFBAU EINES ENDVERSCHLUSSES FÜR EIN SUPRALEITENDES KABEL**
END CLOSURE FOR A SUPERCONDUCTING CABLE AND METHOD TO ASSEMBLE AN END CLOSURE FOR A SUPERCONDUCTING CABLE
FERMETURE D'EXTRÉMITÉ POUR UN CÂBLE SUPRACONDUCTEUR ET PROCÉDÉ DE MONTAGE D'UNE FERMETURE D'EXTRÉMITÉ POUR UN CÂBLE SUPRACONDUCTEUR

(43) Veröffentlichungstag der Anmeldung: 10.10.2018
(73) Patentinhaber: Nexans, 92400 Courbevoie (FR)
(72) Erfinder: STEMMLE, Mark, 30175 Hannover (DE); PEDDE, Waldemar, 30989 Gehrden (DE); LALLOUET, Nicolas, 62132 Fiennes (FR); DELPLACE, Sébastien, 59279 Loon-Plage (FR)
(74) Vertreter: Laget, Jean-Loup

(56) Entgegenhaltungen:
- EP-A1- 1 887 671
- EP-B1- 1 617 537
- DE-B1- 2 830 736

## Beschreibung

Die Erfindung bezieht sich auf einen Endverschluß für ein supraleitfähiges Kabel, welches in einem rohrförmigen, zur Führung eines Kühlmittels dienenden Kryostat angeordnet ist und mindestens einen elektrischen Leiter aufweist, wobei der Endverschluß eine innere Hülle, in welche ein Ende des Kabels in einem Kühlmittel angeodnet ist, und eine äußere Hülle aufweist, wobei die Hüllen aus elektrisch isolierendem Material bestehen und in einem vorhandenen Zwischenraum zwischen der inneren und der äußeren Hülle Isoliermaterial angeordnet ist, wobei die innere Hülle mit dem Kryostat verbunden ist. Der Endverschluß ist im Betriebszustand vertikal angeordnet, wobei ein unterer Teil der äußeren und der inneren Hülle geerdet und ein oberer Teil der Hüllen an Hochspannungspotential angeschlossen ist. Die Erfindung bezieht sich weiterhin auf ein Verfahren zum Aufbau eines Endverschlusses für ein supraleitfähiges Kabel.

Ein supraleitfähiges Kabel, beispielsweise für den Einsatz in Hochspannungsnetzen, hat einen oder mehrere elektrische Leiter aus Material, welches bei ausreichend tiefen Temperaturen in den supraleitfähigen Zustand übergeht. Der mindestens eine Leiter kann auch aus einer Kombination von supraleitfähigem Material und normalleitendem Material bestehen. Mehrere Leiter eines supraleitfähigen Kabels sind zumeist konzentrisch angeordnet. Ein äußerer Schirmleiter umgibt den einen oder die mehreren Leiter des Kabels. Der Schirmleiter kann ebenfalls aus Material bestehen, welches bei ausreichend tiefen Temperaturen in den supraleitfähigen Zustand übergeht. Der Schirmleiter kann aber auch aus einer Kombination von supraleitfähigem Material und normalleitendem Material bestehen oder nur aus normalleitendem Material. Die Leiter und der Schirmleiter sind jeweils durch eine elektrische Isolierschicht voneinander getrennt angeordnet. Die Leiter und der Schirmleiter sowie die dazwischen befindliche elektrische Isolierung sind in einer thermisch isolierenden Hülle angeordnet, in welcher sich ein Kühlmittel befindet. Geeignete Kühlmittel sind beispielsweise Stickstoff im flüssigen Zustand oder Helium.

Die Enden des supraleitfähigen Kabels sind jeweils mit einem Endverschluß, wie eingangs beschrieben, versehen. Der Endverschluß ermöglicht auf beiden Seiten einer Übertragungsstrecke den elektrsichen und thermischen Übergang vom gekühlten, supraleitenden zu einem normalleitenden System bei Umgebungs- bzw. Raumtemperatur. Ein normalleitendes System ist beispielsweise ein elektrisches Hochspannungs- bzw. Stromverteilungsnetz.

Ein solcher Endverschluß ist beispielweise in der EP1617537 B1 beschrieben. Der Endverschluß hat eine Durchführung mit einem elektrischen Leiter für jeden Leiter des supraleitfähigen Kabels. Der elektrische Leiter der Durchführung ist beispielsweise ein Verbinder, welcher einerseits an einen supraleitfähigen Leiter und andererseits an einen normalleitenden Leiter angeschlossen ist.

Derartige Endverschlüsse sind bevorzugt in vertikaler Ausführung eingesetzt. Die vertikale Anordnung ist insbesondere eine platzsparende Anordnung, bei welcher das auf Hochspannungspotential liegende Ende des Endverschlusses möglichst weit vom Erdboden entfernt ist.

Der Erfindung liegt die Aufgabe zugrunde, einen Endverschluß für ein supraleitfähiges Kabel bereitzustellen, welcher einfach aufgebaut ist und dabei allen thermischen und elektrischen Anforderungen genügt.

Diese Aufgabe wird gemäß der Erfindung dadurch gelöst, daß an ihrem jeweiligen oberen Ende die innere Hülle des Endverschlusses mit einer ersten Berstscheibe und die äußere Hülle des Endverschlusses mit einer zweiten Berstscheibe verschlossen sind.

Durch die Anordnung der Berstscheiben an den jeweils oberen Enden der inneren und äußeren Hülle kann bei einem eventuellen Bersten das entweichende Kühlmittel, beispielsweise flüssiger Stickstoff, direkt an die Umgebungsluft abgegeben werden und dort verdampfen. Es sind keine Abfluß- oder Abgasleitungen notwendig. Der Aufbau des Endverschlusses ist dadurch wesentlich vereinfacht.

Die Aufgabe der Erfindung wird weiterhin dadurch gelöst, an ihrem jeweiligen oberen Ende die innere Hülle des Endverschlusses mit einer inneren Abschlußplatte und die äußere Hülle des Endverschlusses mit einer äußeren Abschlußplatte verschlossen sind, wobei der mindestens eine Leiter des Kabels mit der inneren Abschlußplatte elektrisch leitend verbunden ist und die innere Abschlußplatte elektrisch leitend mit der äußeren Abschlußplatte verbunden ist.

Der erfindungsgemäße Endverschluß erlaubt eine besonders einfache Verbindung des supraleitfähigen Kabels mit demselben. Die Montage des Endverschlusses ist deshalb vereinfacht und kostengünstiger als für bekannte Endverschlüsse.

Bei dem erfindungsgemäßen Endverschluß kann der mindestens eine Leiter des Kabels mittels eines Steckers, welcher am Kabelende angebracht ist, mit der inneren Abschlußplatte verbunden sein. Die innere Abschlußplatte kann mittels eines Steckers oder mittels eines flexiblen Strombandes mit der äußeren Abschlußplatte verbunden sein.

Bei dem Endverschluß nach der Erfindung kann mit Vorteil der mindestens eine Leiter des Kabelendes elektrisch leitend mit einem lateral nach außen führenden Kontaktelement verbunden sein.

Das zum Kühlen des Kabelendes notwenige Kühlmittel kann mit Vorteil mittels eines aus elektrisch isolierendem Material bestehenden Kühlrohres von dem geerdeten, unteren Teil des Endverschlusses innerhalb desselben an den unter Hochspannung liegenden, oberen Teil geführt werden. Das Einbringen des Kühlmittels in das Kühlrohr am unteren, geerdeten Ende des Endverschlusses vereinfacht die Handhabung desselben sowie seinen Anschluß an eine Kühlanlage. Das Einbringen des Kühlmittels in die innere Hülle am oberen Ende des Endverschlusses vermeidet eine thermische Schichtung in derselben sowie die Bildung von Gasblasen. Das Kühlrohr kann innerhalb der inneren Hülle verlaufen und konzentrisch zu dieser angeordnet sein, sodaß das zugeführte Kühlmittel in dem Zwischenraum zwischen der inneren Hülle und dem Kühlrohr nach oben gefördert wird. Das Kühlrohr kann auch zwischen der inneren Hülle und der äußeren Hülle das Kühlmittel zum Hochspannungspotential fördern. Durch das Verlaufen des Kühlrohres im Inneren des Endverschlusses ist weiterhin keine thermisch und elektrisch isolierende Versorgungsleitung außerhalb des Endverschlusses notwendig.

Die Erfindung bezieht sich nach einem weiteren Aspekt auf ein Verfahren zum Aufbau eines Endverschlusses für ein supraleitfähiges Kabel. Über das Ende des Kabelkryostaten wird zunächst über das herausragende Kabelende in horizontaler Position ein flexibler Kryostat angebracht, welcher mit dem Kabelkryostat verbunden wird, wobei der Kryostat aus zwei konzentrisch zueinander angeordneten, flexiblen Rohren besteht, welche durch einen vakuumisolierten Spalt voneinander getrennt sind. Der Endverschluß wird ebenfalls in horizontaler Position mit dem Kabelende und dem daran angebrachten Kryostat verbunden. Anschließend wird der Endverschluß in montiertem Zustand in die vertikale Position gebracht wird, wobei der flexible Kryostat und das darin liegende Kabel verbogen werden.

Bei dem erfindungsgemäßen Verfahren wird der Endverschluß über einen hoch flexiblen Kryostat mit dem supraleitenden Kabelende verbunden. Diese beiden Aufbauschritte werden mit Vorteil in der horizontalen Position durchgeführt, wodurch die Arbeitsschritte gegenüber einem vertikalen Aufbau wesentlich erleichtert werden. Nach dem Abschluß der Montagearbeiten wird der montierte Endverschluß in die vertikale Position gebracht. Durch den hoch flexiblen Kryostat werden unerwünschte Spannungen, welche beim Aufrichten auftreten und zu Beschädigungen an der Verbindungestelle des Kabel- mit dem dem Endverschlusskryostaten führen können, an der Schnittstelle zwischen dem Kabelkryostat und dem Endverschluß vermieden. Bei dem Aufrichten werden lediglich das flexible Kryostatsegment und das darin angeordnete supraleitfähige Kabel um ungefähr 90° gebogen.

Ausführungsbeispiele des Erfindungsgegenstandes sind in den Zeichnungen dargestellt. Es zeigen:
Fig. 1 einen Schnitt durch einen Endverschluß nach einem Ausführungsbeispiel der Erfindung,
Fig. 2 einen Schnitt durch einen Endverschluß nach einem weiteren Ausführungsbeispiel,
Fig. 3A und 3B schematische Detaildarstellungen von zwei weiteren Ausführungsbeispielen des erfindungsgemäßen Endverschlusses, und
Fig. 4 einen nach dem erfindungsgemäßen Verfahren aufgebauten Endverschluß.

In den Zeichnungen beziehen sich gleiche Bezugszeichen auf gleiche technische Merkmale.

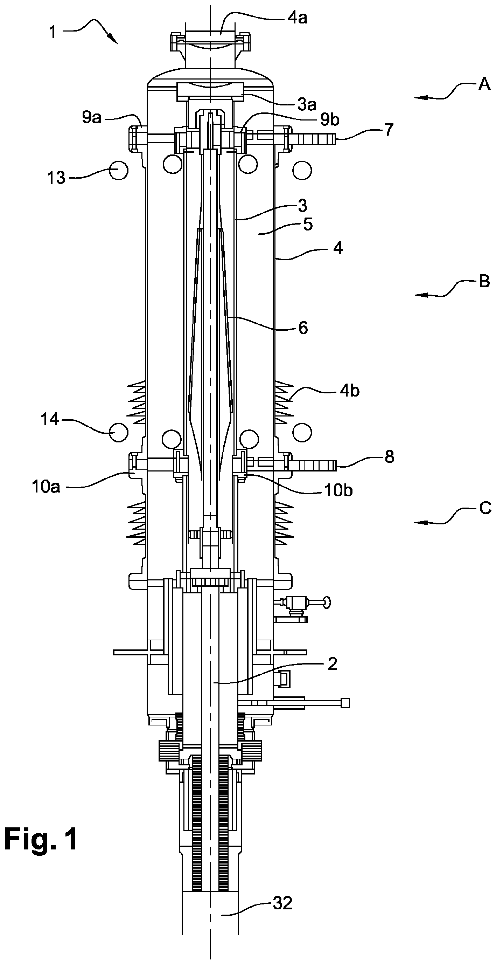

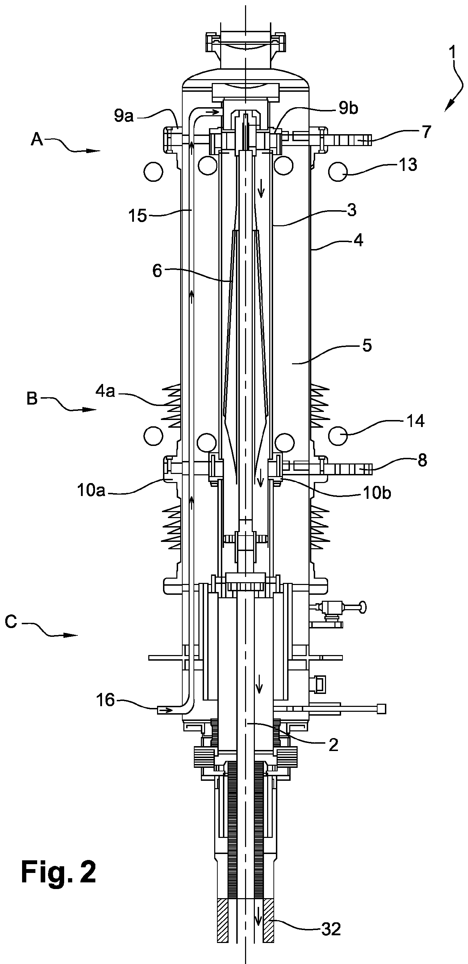

In den Fig. 1 und 2 ist ein Endverschluß 1 nach Ausführungsformen der Erfindung gezeigt. Der Endverschluß 1 ist vertikal angeordnet. In dem Endverschluß 1 ist das Ende eines supraleitfähigen Kabels 2 angeordnet. Das supraleitfähige Kabel 2 kann einen oder mehrere, konzentrisch angeordnete elektrische Leiter sowie einen Schirmleiter aufweisen. In den dargestellten Beispielen hat das Kabel 2 nur einen elektrischen Leiter sowie einen Schirmleiter. Das Kabel 2 ist über die gesamte Übertragungsstrecke von einem Kabelkryostaten 32 umgeben. Das Ende des Kabels 2 ragt über das Ende des Kabelkryostaten 32 hinaus.

Der Leiter des supraleitfähigen Kabels 2 ist mit einem elektrischen Leiter einer Durchführung 7 verbunden, welche auf Hochspannungspotential liegt und die elektrische Verbindung mit dem Energieversorgungsnetz (nicht dargestellt) außerhalb des Endverschlusses 1 herstellt. Eine weitere Durchführung 8 dient der Verbindung des Schirmleiters des supraleitenden Kabels 2 mit Erdpotential. Die beiden Durchführungen 7, 8 sind laterale Durchführungen, welche seitlich von dem Endverschluß 1 wegführen. Die Durchführung zum Hochspannungspotential kann alternativ auch nach oben aus dem Endverschluß 1 führen.

Der Endverschluß 1, wie in den Fig. 1 und 2 dargestellt, besteht im Wesentlichengrößtenteils aus einer inneren Hülle 3 und einer äußeren Hülle 4. Die Hüllen 3, 4 sind jeweils beispielsweise als rotationssymmetrische Rohrstücke ausgeführt. Die innere Hülle 3 besteht aus elektrisch isolierendem Material, beispielsweise aus einem Verbundwerkstoff wie glasfaserverstärktem Kunststoff (GFK) oder aus Keramik. Die innere und die äußere Hülle 3, 4 bestehen zumindest in dem Bereich B zwischen den Durchführungen 7, 8 jeweils aus elektrisch isolierendem Material. In den oberhalb der oberen Durchführung 7 und unterhalb der unteren Durchführung 8 liegenden Bereichen A, C des Endverschlusses können die Hüllen 3, 4 außerdem auch aus Metall bestehen. Die Teilstücke der inneren und äußeren Hülle 3, 4 sind beispielsweise mittels metallischer Flanschverbindungen 9a, 9b, 10a, 10b miteinander verbunden.

Die innere Hülle 3 dient zur Führung des Kühlmittels zum Kühlen des Kabelendes und ist mit dem Kabelkryostat, beispielsweise mittels einer Flanschverbindung, verbunden.

Die äußere Hülle 4 bildet vorteilhafterweise ein Verbundisolator, welcher beispielsweise aus GFK mit auf seiner äußeren Oberfläche aufgebrachten Silikonrippen 4b besteht. Die äußere Hülle 4 bildet mit der inneren Hülle 3 einen Zwischenraum 5, welcher mit thermischem Isoliermaterial gefüllt ist. Die thermische Isolierung kann beispielsweise aus Isolationsschaum oder Glasperlen bestehen. Desweiteren kann zur Verbesserung der Isolierwirkung in dem Zwischenraum 5 auch ein Unterdruck gegenüber der Umgebung erzeugt werden.

Das in die innere Hülle 3 hineinragende Kabelende ist in den dargestellten Ausführungsbeispielen mit einer Feldsteuerungselektrode 6 versehen. Die Feldsteuerung ist notwendig, lokale Feldstärkeüberhöhungen am Kabelende zu vermeiden. Nach anderen Ausführungsbeispielen kann die Feldsteuerung auch als kapazitive Feldsteuerung ausgeführt sein, welche aus einer Anordnung aus leitenden Einlagen besteht. Die mit den Bezugsnummern 13 und 14 bezeichneten Ringe in den Fig. 1 und 2 deuten Abschirmungen an, welche der Feldsteuerung zwischen den metallischen Flaschen 9, 10 dienen, welche auf Hochspannungs- bzw. Erdpotential liegen.

In dem Ausführungsbeispiel nach Fig. 1 ist die innere Hülle 3 an ihrem oberen Ende mittels einer ersten Berstscheibe 3a verschlossen, und die äußere Hülle 4 ist an ihrem oberen Ende mittels einer zweiten Berstscheibe 4a verschlossen. Die Berstscheiben 3a, 4a bestehen vorzugsweise aus Metall, beispielsweise aus Stahl. Beim Überschreiten eines vorgeschriebenen Drucks auf die Berstscheiben 3a, 4a bersten bzw. öffnen sich dieselben, ohne daß die restlichen Komponenten des Endverschlusses 1 beschädigt werden. Vorteilhafterweise wird die zweite, äußere Berstscheibe 4a mit einem wesentlich geringeren Ansprechdruck als die innere Berstscheibe 3a ausgeführt.

Das Kühlmittel wird dem Endverschluß 1 mittels eines Kühlmittelzulaufs zugeführt. Dies ist in Fig. 2 dargestellt. Der Kühlmittelzulauf besteht aus einem Kühlrohr 15, welches das Kühlmittel von dem unteren, geerdeten Bereich C des Endverschlusses 1 in den oberen, auf Hochspannungspotential liegenden Bereich A fördert. Das Kühlrohr 15 kann komplett aus Isoliermaterial bestehen, oder aus Isoliermaterial im Bereich B des Endverschlusses 1 und aus Metall in den Bereichen A und C. An seinem unteren Ende 16 ist das Kühlrohr an eine Kühlanlage (nicht dargestellt) angeschlossen. Die Zuführung in den oberen Bereich A kann aber auch auf andere, sinnvolle Weise durchgeführt werden.

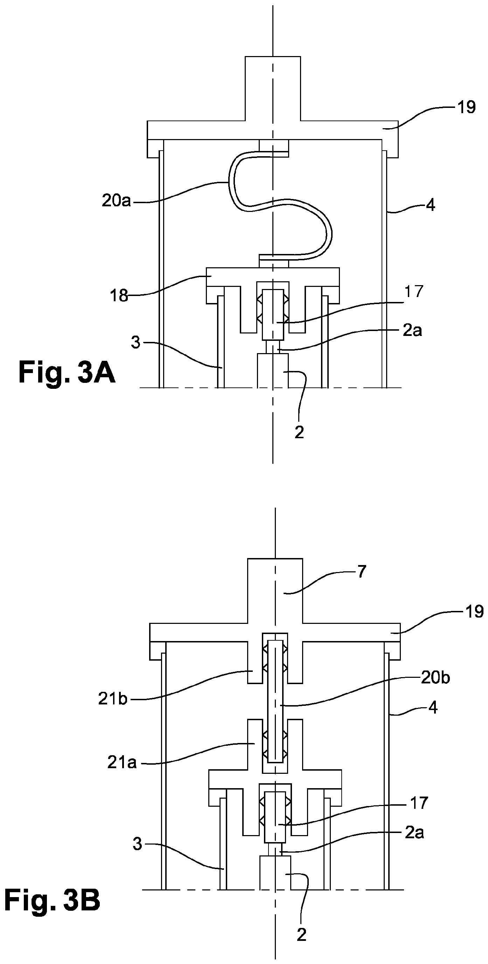

In den Fig. 3A und 3B sind jeweils obere Enden eines erfindungsgemäßen Endverschlusses nach zwei weiteren Ausführungsformen gezeigt. Der Aufbau des Endverschlusses ist grundsätzlich derselbe wie bereits in Verbindung mit den Fig. 1 und 2 beschrieben. Die Beispiele nach Fig. 3A und 3B unterscheiden sich von den bereits beschriebenen Beispielen in der Kontaktierung des supraleitfähigen Kabels 2. Nach den Fig. 1 und 2 werden die Durchführungen 7, 8 zur Kabelkontaktierung seitlich aus dem Endverschluß 1 herausgeführt. In den in den Fig. 3A und 3B beschriebenen Beispielen wird das Kabelende 2 mit Verbindungselementen verbunden, welche direkt nach oben aus dem Endverschluß herausgeführt werden. Der Leiter 2a des Kabels 2 ist mittels eines Steckers 17 mit einer ersten, inneren Abschlußplatte 18 verbunden. Die innere Abschlußplatte 18 verschließt gleichzeitig die innere Hülle 3 an ihrem oberen Ende. Die äußere Hülle 4 ist mit einer zweiten, äußeren Abschlußplatte 19 verschlossen. Die äußere Abschlußplatte 19 entspricht einer Durchführung auf Hochspannungspotential. Die innere Abschlußplatte 18 und die äußere Abschlußplatte 19 sind mittels eines leitenden Kontaktelements 20a, 20b miteinander verbunden. Das leitende Kontaktelement kann beispielsweise ein flexibles Stromband 20a sein, wie in Fig. 3A gezeigt. Das leitende Kontaktelement kann auch ein zweiter Stecker 20b sein, welcher jeweils in dafür vorgesehene Aufnahmen 21a, 21b der beiden Abschlußplatten 18, 19 gesteckt wird, wie in Fig. 3B gezeigt.

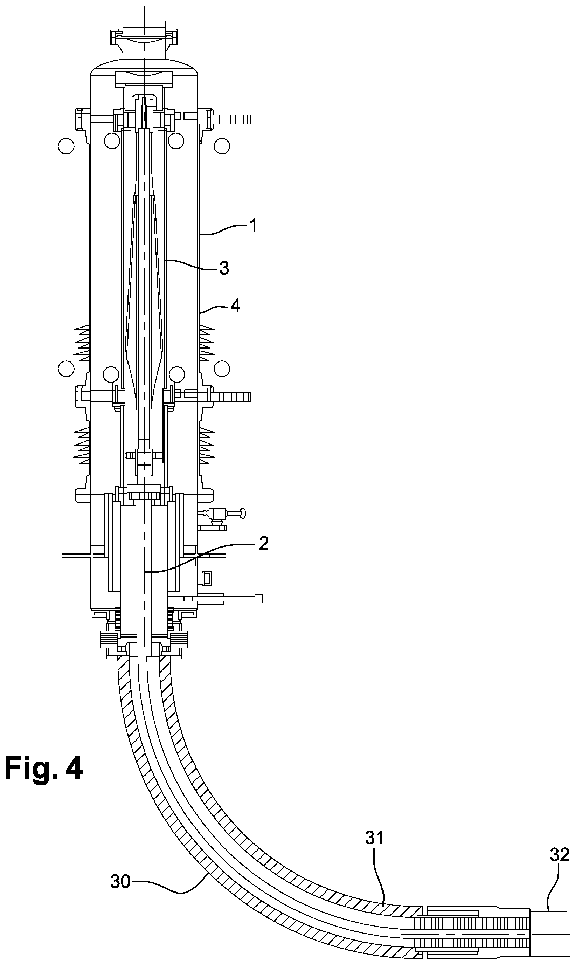

In der Fig. 4 ist ein nach dem erfindungsgemäßen Verfahren aufgebauter Endverschluß 1 dargestellt. Nach dem Verfahren wird zunächst in horizontaler Position über das Kabelende ein hoch flexibler Kryostat 30 gestülpt. Der erfindungsgemäße flexible Verbindungskryostat 30 besteht aus zwei konzentrisch zueinander angeordneten, hoch flexiblen Rohren, welche durch einen vakuumisolierten Spalt 31 voneinander getrennt sind. Die Rohre sind beispielsweise metallische Wellrohre. Der hoch flexible Kryostat 30 wird mit dem Kabelkryostat 32 verbunden. Das Kabelende und der flexible Kryostat 30 werden anschließend ebenfalls in horizontaler Position mit einem Endverschluß 1, wie er beispielweise in Verbindung mit den Fig. 1 und 2 beschrieben wurde, verbunden. Das Kabelende liegt dann in der inneren Hülle 3 des Endverschlusses 1. Anschließend wird der Endverschluß 1 in montiertem Zustand in die vertikale Position gebracht, wie in Fig. 4 dargestellt. Dabei werden der hoch flexible Kryostat 30 und das darin liegende Kabel 2 um ca. 90° verbogen. Der Verbindungskryostat 30 ist dann einerseits mit der inneren Hülle 3 und andererseits mit dem Kabelkryostat 32 verbunden. Der Vakuumraum 31 des Verbindungskryostats 30 ist vorteilhafterweise von dem Zwischenraum 5 zwischen der inneren Hülle 3 und der äußeren Hülle 4 des Endverschlusses 1 getrennt. Dadurch kann der Verbindungskryostat 30 bereits vor der Installation des Endverschlusses 1 evakuiert werden.

## Patentansprüche

1. Endverschluß (1) für ein supraleitfähiges Kabel (2), welches in einem rohrförmigen, zur Führung eines Kühlmittels dienenden Kryostat (30) angeordnet ist und mindestens einen elektrischen Leiter aufweist, wobei der Endverschluß (1) eine innere Hülle (3), in welcher ein Ende des Kabels (2) in einem Kühlmittel angeordnet ist, und eine äußere Hülle (4) aufweist, wobei die Hüllen (3, 4) aus elektrisch isolierendem Material bestehen und in einem vorhandenen Zwischenraum (5) zwischen der inneren und der äußeren Hülle Isoliermaterial angeordnet ist, wobei die innere Hülle (3) mit dem Kryostat verbindbar ist, und wobei der Endverschluß (1) in Montageposition vertikal so angeodnet ist, daß im Betriebszustand ein unterer Teil (C) der inneren und äußeren Hülle (4) geerdet und ein oberer Teil (A) der inneren und äußeren Hülle (4) an Hochspannungspotential angeschlossen ist, **dadurch gekennzeichnet, daß** an ihrem jeweiligen oberen Ende die innere Hülle (3) mit einer ersten Berstscheibe (3a) und die äußere Hülle (4) mit einer zweiten Berstscheibe (4a) verschlossen sind.

2. Endverschluß (1) für ein supraleitfähiges Kabel (2), welches in einem rohrförmigen, zur Führung eines Kühlmittels dienenden Kryostat angeordnet ist und mindestens einen elektrischen Leiter aufweist, wobei der Endverschluß (1) eine innere Hülle (3), in welcher ein Ende des Kabels (2) in einem Kühlmittel angeordnet ist, und eine äußere Hülle (4) aufweist, wobei die Hüllen (3, 4) aus elektrisch isolierendem Material bestehen und in einem vorhandenen Zwischenraum (5) zwischen der inneren und der äußeren Hülle Isoliermaterial angeordnet ist, wobei die innere Hülle (3) mit dem Kryostat verbindbar ist, und wobei der Endverschluß in Montageposition vertikal so angeordnet ist, daß im Betriebszustand ein unterer Teil (C) der inneren und äußeren Hülle (4) geerdet und ein oberer Teil (A) der inneren und äußeren Hülle (4) an Hochspannungspotential angeschlossen ist, **dadurch gekennzeichnet, daß** an ihrem jeweiligen oberen Ende die innere Hülle (3) mit einer inneren Abschlußplatte (18) und die äußere Hülle (4) mit einer äußeren Abschlußplatte (19) verschlossen sind, wobei der mindestens eine Leiter (2a) des Kabels (2) mit der inneren Abschlußplatte (18) elektrisch leitend verbunden ist und die innere Abschlußplatte (18) elektrisch leitend mit der äußeren Abschlußplatte (19) verbunden ist.

3. Endverschluß (1) nach Anspruch 2, **dadurch gekennzeichnet, daß** der mindestens eine Leiter des Kabels (2) mittels eines Steckers (17) mit der inneren Abschlußplatte (18) verbunden ist.

4. Endverschluß (1) nach Anspruch 2 oder 3, **dadurch gekennzeichnet, daß** die innere Abschlußplatte (18) mittels eines Steckers (20b) oder mittels eines flexiblen Strombandes (20a) mit der äußeren Abschlußplatte (19) verbunden ist.

5. Endverschluß (1) nach einem der vorangehenden Ansprüche, **dadurch gekennzeichnet, daß** der mindestens eine Leiter des Kabelendes elektrisch leitend mit einem lateral nach außen führenden ersten Kontaktelement (7) verbunden ist.

6. Endverschluß (1) nach einem der vorangehenden Ansprüche, **dadurch gekennzeichnet, daß** ein Schirmleiter des Kabelendes elektrisch leitend mit einem lateral nach außen führenden zweiten Kontaktelement (8) verbunden ist.

7. Endverschluß (1) nach einem der vorangehenden Ansprüche, **dadurch gekennzeichnet, daß** mittels eines aus elektrisch isolierendem Material bestehenden Kühlrohres (15) Kühlmittel von dem geerdeten Teil (C) des Endverschlusses (1) innerhalb desselben in den unter Hochspannung liegenden Teil (A) geführt wird.

8. Endverschluß (1) nach Anspruch 7, **dadurch gekennzeichnet, daß** das Kühlrohr (15) innerhalb der inneren Hülle (3) verläuft und konzentrisch zu dieser angeordnet ist.

9. Endverschluß (1) nach einem der vorangehenden Ansprüche, **dadurch gekennzeichnet, daß** das in dem Zwischenraum (5) angeordnete Isoliermaterial aus einem Feststoff besteht.

10. Endverschluß (1) nach einem der vorangehenden Ansprüche, **dadurch gekennzeichnet, daß** in dem Zwischenraum (5) ein Unterdruck gegenüber dem Atmosphärendruck erzeugt wird.

11. Verfahren zum Aufbau eines Endverschlusses (1) für ein supraleitfähiges Kabel (2), welches in einem rohrförmigen, zur Führung eines Kühlmittels dienenden Kryostat (32) angeordnet ist und mindestens einen elektrischen Leiter aufweist, wobei der Endverschluß (1) eine innere Hülle (3), in welcher ein Ende des Kabels (2) in einem Kühlmittel angeordnet wird, und eine äußere Hülle (4) aufweist, wobei die Hüllen (3, 4) aus elektrisch isolierendem Material bestehen und in einem vorhandenen Zwischenraum (5) zwischen der inneren und der äußeren Hülle Isoliermaterial angeordnet ist, wobei die innere Hülle (3) mit dem Kryostat verbunden wird, und wobei der Endverschluß (1) in Montageposition vertikal so angeordnet wird, daß im Betriebszustand ein unterer Teil (C) der inneren und äußeren Hülle (3, 4) geerdet und ein oberer Teil (A) der inneren und äußeren Hülle (3, 4) an Hochspannungspotential angeschlossen ist, **dadurch gekennzeichnet, daß**
- über das Kabelende in horizontaler Position ein hoch flexibler Kryostat (30) angebracht wird, welcher mit dem Kabelkryostat (32) verbunden wird, wobei der flexible Kryostat (30) aus zwei konzentrisch zueinander angeordneten, hoch flexiblen Rohren besteht, welche durch einen vakuumisolierten Spalt (31) voneinander getrennt sind,
- der Endverschluß (1) in horizontaler Position mit dem Kabelende und dem daran angebrachten hoch flexiblen Kryostat (30) verbunden wird, und
- der Endverschluß (1) in montiertem Zustand anschließend in die vertikale Position gebracht wird, wobei der hoch flexible Kryostat (30) und das darin liegende Kabel (2) verbogen werden.

## Claims

1. End closure (1) for a superconducting cable (2), which is arranged in a tubular cryostat (30) serving to guide a coolant, and at least one electrical conductor, wherein the end closure (1) has an inner sheath (3), in which one end of the cable (2) is disposed in a coolant, and an outer sheath (4), wherein the sheaths (3, 4) are made of electrically insulating material and are arranged in a space (5) between the inner and the outer sheath of insulating material, wherein the inner sheath (3) is connectable to the cryostat, and wherein the end closure (1) is arranged vertically in its mounting position, so that, in the operating state, a lower part (C) of the inner and outer sheath (4) is earthed, while an upper part (A) of the inner and outer sheath (4) is connected to high voltage potential, **characterized in that** at their respective upper ends, the inner sheath (3) is closed with a first bursting disk (3a), while the outer sheath (4) is closed with a second bursting disk (4a).

2. End closure (1) for a superconducting cable (2), which is arranged in a tubular cryostat (30) serving to guide a coolant, and at least one electrical conductor, wherein the end closure (1) has an inner sheath (3), in which one end of the cable (2) is disposed in a coolant, and an outer sheath (4), wherein the sheaths (3, 4) are made of electrically insulating material and are arranged in a space (5) between the inner and the outer sheath of insulating material, wherein the inner sheath (3) is connectable to the cryostat, and wherein the end closure (1) is arranged vertically in its mounting position, so that, in the operating state, a lower part (C) of the inner and outer sheath (4) is earthed, while an upper part (A) of the inner and outer sheath (4) is connected to high voltage potential, **characterized in that** at its respective upper end, the inner sheath (3) is closed with an inner end plate (18) while the outer sheath (4) is closed with an outer end plate (19), wherein the at least one conductor (2a) of the cable (2) is electrically connected with the inner end plate (18), while the inner end plate (18) is electrically connected to the outer end plate (19).

3. End closure (1) according to claim 2, **characterized in that** the at least one conductor of the cable (2) is connected with the inner end plate (18) by means of a plug (17) .

4. End closure (1) according to claim 2 or 3, **characterized in that** the inner end plate (18) is connected with the outer end plate (19) by means of a plug (20b) or by means of a flexible current lead (20a).

5. End closure (1) according to one of the preceding claims, **characterized in that** the at least one conductor of the cable end is electrically connected with a first contact element (7) leading laterally outwards.

6. End closure (1) according to one of the preceding claims, **characterized in that** a shield conductor of the cable end is electrically connected with a second contact element (8) leading laterally outwards.

7. End closure (1) according to one of the preceding claims, **characterized in that** coolant from the earthed part (C) of the end closure (1) is led inside the same high-voltage part (A) by means of a cooling tube (15) consisting of electrically insulating material.

8. End closure (1) according to claim 7, **characterized in that** the cooling tube (15) is arranged concentrically within the inner sheath (3).

9. End closure (1) according to one of the preceding claims, **characterized in that** the insulating material arranged in the intermediate space (5) consists of a solid.

10. End closure (1) according to one of the preceding claims, **characterized in that** a negative pressure relative to atmospheric pressure is generated in the intermediate space (5) .

11. Method for constructing an end closure (1) for a superconducting cable (2), which is arranged in a tubular cryostat (30) serving to guide a coolant, and at least one electrical conductor, wherein the end closure (1) has an inner sheath (3), in which one end of the cable (2) is disposed in a coolant, and an outer sheath (4), wherein the sheaths (3, 4) are made of electrically insulating material and are arranged in a space (5) between the inner and the outer sheath of insulating material, wherein the inner sheath (3) is connectable to the cryostat, and wherein the end closure (1) is arranged vertically in its mounting position, so that, in the operating state, a lower part (C) of the inner and outer sheath (4) is earthed, while an upper part (A) of the inner and outer sheath (4) is connected to high voltage potential, **characterized in that**
- a highly flexible cryostat (30) is attached in a horizontal position over the cable end, and is connected to the cable cryostat (32), wherein the flexible cryostat (30) consists of two concentrically arranged, highly flexible tubes, which are separated from each other by a vacuum-insulated gap (31),
- the end closure (1) is connected in a horizontal position with the cable end and the highly flexible cryostat (30) attached thereto, while
- the end closure (1) is subsequently brought into the vertical position when assembled, wherein the highly flexible cryostat (30) and the cable (2) lying inside it, are bent.

## Revendications

1. Fermeture d'extrémité (1) pour un câble (2) supraconducteur qui est disposé dans un cryostat (30) tubulaire servant à conduire un réfrigérant et qui comporte au moins un conducteur électrique, la fermeture d'extrémité (1) comportant une gaine intérieure (3), dans laquelle une extrémité du câble (2) est disposée dans un réfrigérant, et une gaine extérieure (4), les gaines (3, 4) étant composées de matériau électriquement isolant, et du matériau isolant étant disposé dans un espace intermédiaire (5) existant entre la gaine intérieure et la gaine extérieure, la gaine intérieure (3) pouvant être raccordée au cryostat, et la fermeture d'extrémité (1) étant, dans la position de montage, disposée verticalement de telle sorte que, dans l'état de fonctionnement, une partie inférieure (C) de la gaine intérieure et de la gaine extérieure (4) est mise à la terre, et une partie supérieure (A) de la gaine intérieure et de la gaine extérieure (4) est connectée à un potentiel à haute tension, **caractérisée en ce que,** à son extrémité supérieure respective, la gaine intérieure (3) est fermée par un premier disque de rupture (3a), et la gaine extérieure (4) est fermée par un deuxième disque de rupture (4a).

2. Fermeture d'extrémité (1) pour un câble (2) supraconducteur qui est disposé dans un cryostat tubulaire servant à conduire un réfrigérant et qui comporte au moins un conducteur électrique, la fermeture d'extrémité (1) comportant une gaine intérieure (3), dans laquelle une extrémité du câble (2) est disposée dans un réfrigérant, et une gaine extérieure (4), les gaines (3, 4) étant composées de matériau électriquement isolant, et du matériau isolant étant disposé dans un espace intermédiaire (5) existant entre la gaine intérieure et la gaine extérieure, la gaine intérieure (3) pouvant être raccordée au cryostat, et la fermeture d'extrémité étant, dans la position de montage, disposée verticalement de telle sorte que, dans l'état de fonctionnement, une partie inférieure (C) de la gaine intérieure et de la gaine extérieure (4) est mise à la terre, et une partie supérieure (A) de la gaine intérieure et de la gaine extérieure (4) est connectée à un potentiel à haute tension, **caractérisée en ce que,** à son extrémité supérieure respective, la gaine intérieure (3) est fermée par une plaque de terminaison (18) intérieure, et la gaine extérieure (4) est fermée par une plaque de terminaison (19) extérieure, le conducteur (2a) au moins au nombre de un du câble (2) est raccordé de façon électriquement conductrice à la plaque de terminaison (18) intérieure, et la plaque de terminaison (18) intérieure est raccordée de façon électriquement conductrice à la plaque de terminaison (19) extérieure.

3. Fermeture d'extrémité (1) selon la revendication 2, **caractérisée en ce que** le conducteur au moins au nombre de un du câble (2) est raccordé à la plaque de terminaison (18) intérieure au moyen d'un connecteur (17).

4. Fermeture d'extrémité (1) selon la revendication 2 ou 3, **caractérisée en ce que** la plaque de terminaison (18) intérieure est raccordée à la plaque de terminaison (19) extérieure au moyen d'un connecteur (20b) ou au moyen d'une tresse conductrice flexible (20a).

5. Fermeture d'extrémité (1) selon l'une des revendications précédentes, **caractérisée en ce que** le conducteur au moins au nombre de un de l'extrémité de câble est raccordé de façon électriquement conductrice à un premier élément de contact (7) conduisant latéralement vers l'extérieur.

6. Fermeture d'extrémité (1) selon l'une des revendications précédentes, **caractérisée en ce qu'**un conducteur blindé de l'extrémité de câble est raccordé de façon électriquement conductrice à un deuxième élément de contact (8) conduisant latéralement vers l'extérieur.

7. Fermeture d'extrémité (1) selon l'une des revendications précédentes, **caractérisée en ce que**, au moyen d'un tube de refroidissement (15) composé de matériau électriquement isolant, du réfrigérant est conduit à partir de la partie (C) mise à la terre de la fermeture d'extrémité (1) à l'intérieur de celle-ci jusque dans la partie (A) sous haute tension.

8. Fermeture d'extrémité (1) selon la revendication 7, **caractérisée en ce que** le tube de refroidissement (15) court à l'intérieur de la gaine intérieure (3) et est disposé de façon concentrique à celle-ci.

9. Fermeture d'extrémité (1) selon l'une des revendications précédentes, **caractérisée en ce que** le matériau isolant disposé dans l'espace intermédiaire (5) est composé de matière solide.

10. Fermeture d'extrémité (1) selon l'une des revendications précédentes, **caractérisée en ce que**, dans l'espace intermédiaire (5), il est produit une dépression par rapport à la pression atmosphérique.

11. Procédé de construction d'une fermeture d'extrémité (1) pour un câble (2) supraconducteur qui est disposé dans un cryostat (32) tubulaire servant à conduire un réfrigérant et qui comporte au moins un conducteur électrique, la fermeture d'extrémité (1) comportant une gaine intérieure (3), dans laquelle une extrémité du câble (2) est disposée dans un réfrigérant, et une gaine extérieure (4), les gaines (3, 4) étant composées de matériau électriquement isolant, et du matériau isolant étant disposé dans un espace intermédiaire (5) existant entre la gaine intérieure et la gaine extérieure, la gaine intérieure (3) étant raccordée au cryostat, et la fermeture d'extrémité (1) étant, dans la position de montage, disposée verticalement de telle sorte que, dans l'état de fonctionnement, une partie inférieure (C) de la gaine intérieure et de la gaine extérieure (3,4) est mise à la terre, et une partie supérieure (A) de la gaine intérieure et de la gaine extérieure (3,4) est connectée à un potentiel à haute tension, **caractérisé en ce que**
- par le biais de l'extrémité de câble, en position horizontale, un cryostat (30) très flexible est mis en place, lequel est raccordé au cryostat de câble (32), le cryostat (30) flexible se composant de deux tubes très flexibles disposés de façon mutuellement concentrique qui sont séparés l'un de l'autre par une fente (31) isolée par le vide,
- la fermeture d'extrémité (1) est, en position horizontale, raccordée à l'extrémité de câble et au cryostat (30) très flexible qui est mis en place sur celle-ci,
- la fermeture d'extrémité (1) est, dans l'état monté, placée ensuite dans la position verticale, le cryostat (30) très flexible et le câble (2) qui y est logé étant tordus.
